# EUROPÄISCHE PATENTSCHRIFT

(11) **EP 2 962 796 B1**
(45) Veröffentlichungstag und Bekanntmachung des Hinweises auf die Patenterteilung: **19.09.2018**
(21) Anmeldenummer: 15175281.3
(22) Anmeldetag: 03.07.2015
(51) Int. Cl.: B23C 5/10, B23C 5/28, B23D 77/00, B23D 77/02

(54) **REIB-, FRÄS- ODER BOHRWERKZEUG**
REAMING, MILLING OR DRILLING TOOL
OUTIL D'ALÉSAGE, DE FRAISAGE OU DE PERCAGE

(30) Priorität: 04.07.2014 DE 102014109390
(43) Veröffentlichungstag der Anmeldung: 06.01.2016
(73) Patentinhaber: Jakob Lach GmbH & Co. KG, 63452 Hanau (DE)
(72) Erfinder: LACH, Horst, 63450 Hanau (DE)
(74) Vertreter: Stoffregen, Hans-Herbert

(56) Entgegenhaltungen:
- WO-A1-2006/118505
- DE-A1- 3 319 718
- JP-A- S5 669 007
- JP-A- H05 301 104
- JP-A- S63 306 813
- JP-A- 2010 094 747
- JP-A- 2013 049 106
- US-A- 4 535 216
- US-A1- 2001 007 215
- US-A1- 2012 103 701

## Beschreibung

Die Erfindung betrifft ein Reib-, Fräs- oder Bohrwerkzeug, mit zumindest einem an einem Werkzeugkörper befestigten Schneideinsatz aus polykristallinem Diamant (PKD) oder kubischem Bornitrid (CBN), wobei ein durch den Werkzeugkörper geführter Kühlmittelkanal einen Anschluss an wenigstens einen in den Schneideinsatz eingearbeiteten Kühlmittelkanalabschnitt bildet.

Ein Reib-, Fräs- oder Bohrwerkzeug der eingangs genannten Art ist in der JP 2010-94747 A beschrieben. Die JP 2010-094 747 A betrifft ein Schneidwerkzeug gemäß dem Oberbegriff des Anspruchs 1 und einen
Schneideinsatz für ein solches. Das Schneidwerkzeug umfasst einen um eine Achse rotierenden Werkzeugkörper mit einer frontseitigen Stirnfläche, auf der Schneideinsätze angeordnet sind. Die Schneideinsätze weisen an ihrem äußeren Umfang eine Schneidkante auf. Ferner hat der Schneideinsatz eine Spanfläche, die in Rotationsrichtung zeigt und eine Freifläche, die die Spanfläche schneidet. Durch eine Schnittlinie zwischen der Spanfläche und der Freifläche wird eine Hauptschneidkante gebildet. Ferner ist eine den Schneideinsatz durchdringende Versorgungsöffnung vorgesehen, die mit einem in dem Werkzeugkörper gebildeten Versorgungskanal verbunden ist, um die Freifläche mit Schneidflüssigkeit zu versorgen.

Die JP 05 301 104 A bezieht sich auf eine Einweg-Werkzeugspitze und ein Verfahren zur Herstellung einer solchen. In der Werkzeugspitze sind Durchbohrungen zur Zuleitung einer Kühlflüssigkeit vorgesehen, wobei jede der Durchbohrungen eine eigene Öffnung an der Freifläche des Einweg-Schneideinsatzes aufweist.

Die US 4 535 216 A beschreibt ein Metallbearbeitungswerkzeug mit elektrischer Beheizung. Das Metallbearbeitungswerkzeug umfasst einen Schneideinsatz mit 03. Juli 2015-55367 B

Spanbrechern. In dem Schneideinsatz sind Kanäle für ein Kühlfluid vorgesehen, wobei die Kanäle in einer Freifläche des Schneideinsatzes münden.

Die JP 2013069106 A betrifft einen Drehmeißel mit einem Schneideinsatz, der in einem Trägermaterial eingearbeitet ist, welches mit dem Werkzeugkörper über eine Schraubverbindung verbindbar ist. Bei dieser Ausführungsform sind die Kühlmittelkanalabschnitte ausschließlich in dem Trägermaterial eingearbeitet, ohne den Schneideinsatz selbst zu durchqueren.

Die US 2011/0007215 A1 betrifft ein Zerspannungswerkzeug mit zumindest einem an einem Werkzeugkörper befestigten Schneideinsatz, wobei in dem Werkzeugkörper ein Kühlmittelkanal vorgesehen ist, der einen Anschluss an wenigstens einen in dem Schneideinsatz eingearbeiteten Kühlmittelkanalabschnitt bildet, wobei jedoch der Kühlmittelkanalabschnitt in einer Spanfläche bzw. Freifläche des Schneideinsatzes mündet.

Die JP 5659007 A betrifft ein Zerspannungswerkzeug in Form eines Drehmeißels mit zumindest einem an einem Werkzeugkörper befestigten Schneideinsatz, wobei ein durch den Werkzeugkörper geführter Kühlmittelkanal ein Anschluss an wenigstens einen in den Schneideinsatz eingarbeiteten Kühlmittelabschnitt bildet, wobei der Kühlmittelkanalabschnitt mit zumindest einer Mündungsöffnung in einer Spanfläche des Schneideinsatzes mündet.

Die DE 10 2009 030 587 B3 betrifft ein Zerspanungswerkzeug bei dem der Kühlmittelkanalabschnitt jeweils nur teilweise in dem Schneideinsatz und auf dem restlichen Teil des Umfangs in dem Werkzeuggrundkörper ausgebildet ist. Dabei wird mittels einer Drahtelektrode oder eines Lasers in den Schneideinsatz eine am Umfang offene Nut so eingearbeitet, dass der Kühlmittelkanalabschnitt in einer Spanfläche des Schneideinsatzes mündet.

Davon ausgehend liegt der vorliegenden Erfindung die Aufgabe zu Grunde, ein Zerspanungswerkzeug der eingangs genannten Art derart weiterzubilden, dass die Kühlung, Spanabfuhr sowie Schmierung des zumindest einen Schneideinsatzes verbessert wird.

Die Aufgabe wird erfindungsgemäß durch die Merkmale des Anspruchs 1 gelöst. Dabei ist vorgesehen, dass der zumindest eine Kühlmittelkanalabschnitt mit zumindest einer Mündungsöffnung in der Rundfasenfläche des Schneideinsatzes mündet.

Das erfindungsgemäße Reib-, Fräs- oder Bohrwerkzeug weist zumindest einen an einem Werkzeugkörper befestigten, zumindest eine Rundfasenfläche und vorzugsweise zumindest eine Freifläche aufweisenden Schneideinsatz aus polykristallinem Diamant oder kubischem Bornitrid auf, wobei ein durch den Werkzeugkörper geführter Kühlmittelkanal einen Anschluss an wenigstens einen in dem Schneideinsatz eingearbeiteten Kühlmittelkanalabschnitt mit zumindest einer Mündungsöffnung in der Rundfasenfläche bildet.

Durch die erfindungsgemäßen Ausführungsformen, nämlich dass die Kühlmittelkanalabschnitte umfangsseitig in der Rundfasenfläche und ggf. auch in der Freifläche des Schneideinsatzes münden, wird der Vorteil erreicht, dass ergänzend zu der Kühlung des Schneideinsatzes an der zu bearbeitenden Werkzeugoberfläche ein Kühlmittelfilm wie Ölfilm erzeugt wird, der bei hohen Arbeitsgeschwindigkeiten verbesserte Standzeigen ermöglicht. Insbesondere wird ein Blockieren des Werkzeugs in dem Werkstück minimiert. Neben der Kühlwirkung sowie der Bildung eines Kühlmittelfilms auf der zu bearbeitenden Werkstückoberfläche zwischen angrenzenden Schneideinsätzen, wird auch eine verbesserte Spanabfuhr, insbesondere durch das aus den Mündungsöffnungen in der Freifläche austretende Kühlmittel erreicht.

Zur Verbesserung der Kühlwirkung ist vorzugsweise vorgesehen, dass die Kühlmittelkanalabschnitte vollständig in dem Schneideinsatz verlaufen. Vorzugswiese ist der Kühlmittelkanalabschnitt, der den Schneideinsatz durchsetzt, als Bohrung ausgebildet. Die Bohrung kann durch Funkenerodier- oder Laserverfahren ausgebildet sein.

Um eine möglichst wirksame und flächige Verteilung zur Bildung des Kühlmittelfilms zu erreichen ist vorzugsweise vorgesehen, dass der Kühlmittelabschnitt auf der Rundfasenfläche in einer trichterförmigen Mündungsöffnung mündet. Die trichterförmige Mündungsöffnung ermöglicht eine Ansammlung von Kühlmittel und somit eine bessere Verteilung auf der zu bearbeitenden Werkstückoberfläche. Zudem wird die Bildung eines Staudrucks vermieden. Durch den sich ausbildenden Ölfilm wird somit auch die Reibung zwischen Rundfasenfläche und Werkstückoberfläche reduziert mit der Folge, dass ein Blockieren des Werkzeugs im Werkstück minimiert wird.

Vorzugsweise ist der Schneideinsatz als Solid-PKD- oder Solid-CBN ausgebildet und weist eine Breite BS im Bereich von 1,5 mm ≤ BS ≤ 5mm, vorzugsweise BS = 2,5 mm auf.

Eine weitere bevorzugte Ausführungsform zeichnet sich dadurch aus, dass der Schneideinsatz als Verbund-PKD oder Verbund-CBN ausgebildet ist, umfassend einen Hartmetallträger mit einer Breite BH im Bereich von 1 mm ≤ BH ≤ 2 mm, vorzugsweise BH = 1,5 mm, und einer PKD- oder CBN-Diamantschicht mit einer Breite BD im Bereich von 0,5 mm ≤ BD ≤ 1,5 mm, vorzugsweise BD = 1 mm.

Der Kühlmittelkanalabschnitt hat bevorzugt einen Durchmesser DK im Bereich von 0,15 mm ≤ DK ≤ 1,5 mm, vorzugsweise DK = 0,6 bis 0,8 mm.

Die trichterförmige Mündungsöffnung in der Rundfasenfläche kann einen Durchmesser DM im Bereich von 0,5 mm ≤ DM ≤ 1,5 mm, vorzugsweise DM 1,0 mm aufweisen. Die trichterförmige Mündungsöffnung kann rund oder elliptisch ausgebildet sein.

Um eine möglichst gleichmäßige Verteilung des Kühlmittels zur Bildung eines Ölfilms sowie zur Kühlung des Schneideinsatzes in seiner Längserstreckung ist vorzugsweise vorgesehen, dass der Schneideinsatz entlang seiner Längserstreckung der Rundfasenfläche und/oder Freifläche mehrere Mündungsöffnungen für Kühlmittel aufweist. Die mit den Mündungsöffnungen verbundenen Kühlmittelkanalabschnitte weisen vorzugsweise einen radialen Verlauf auf. Alternativ können die Kühlmittelkanalabschnitte zur Erzeugung einer bevorzugten Austrittsrichtung in einem Winkel zur Längsachse des Werkzeugkörpers ausgerichtet sein.

Weitere Einzelheiten, Vorteile und Merkmale der Erfindung ergeben sich aus der nachfolgenden Beschreibung eines den Zeichnungen zu entnehmenden bevorzugten Ausführungsbeispiels.

Es zeigen:
- Fig. 1: eine perspektivische Ansicht eines nicht erfindungsgemäßen Fräswerkzeugs mit zwei Schneideinsätzen aus Solid-PKD,
- Fig. 2: eine Seitenansicht des Fräswerkzeugs nach Fig. 1,
- Fig. 3: eine Stirnansicht des Fräswerkzeugs gemäß Fig. 1 und Fig. 2,
- Fig. 4: einen Querschnitt nach Schnittlinie A-A gemäß Fig. 2,
- Fig. 5: eine perspektivische Ansicht eines nicht erfindungsgemäßen Fräswerkzeugs mit zwei Schneideinsätzen aus Verbund-PKD,
- Fig. 6: eine Seitenansicht des Fräswerkzeugs gemäß Fig. 5,
- Fig. 7: eine Stirnansicht des Fräswerkzeugs gemäß Fig. 5 und Fig. 6,
- Fig. 8: einen Querschnitt nach Schnittlinie A-A gemäß Fig. 6,
- Fig. 9: eine perspektivische Ansicht eines vorderen Endes einer ersten Ausführungsform eines erfindungsgemäßen Zerspanungswerkzeugs in Form eines Reibwerkzeugs mit zwei Schneideinsätzen aus Solid-PKD,
- Fig. 10: eine Seitenansicht des vorderen Endes des Reibwerkzeugs gemäß Fig. 9,
- Fig. 11: einen Querschnitt nach Schnittlinie H-H gemäß Fig. 10,
- Fig. 12: eine perspektivische Darstellung des erfindungsgemäßen Reibwerkzeugs in einer Bohrung eines Werkstücks,
- Fig. 13: eine Seitenansicht des erfindungsgemäßen Reibwerkzeugs in dem Werkstück,
- Fig. 14: eine Schnittdarstellung des erfindungsgemäßen Reibwerkzeugs in dem Werkstück entlang der Linie J-J gemäß Fig. 13,
- Fig. 15: eine vergrößerte Darstellung einer Einzelheit K gemäß Fig. 14.

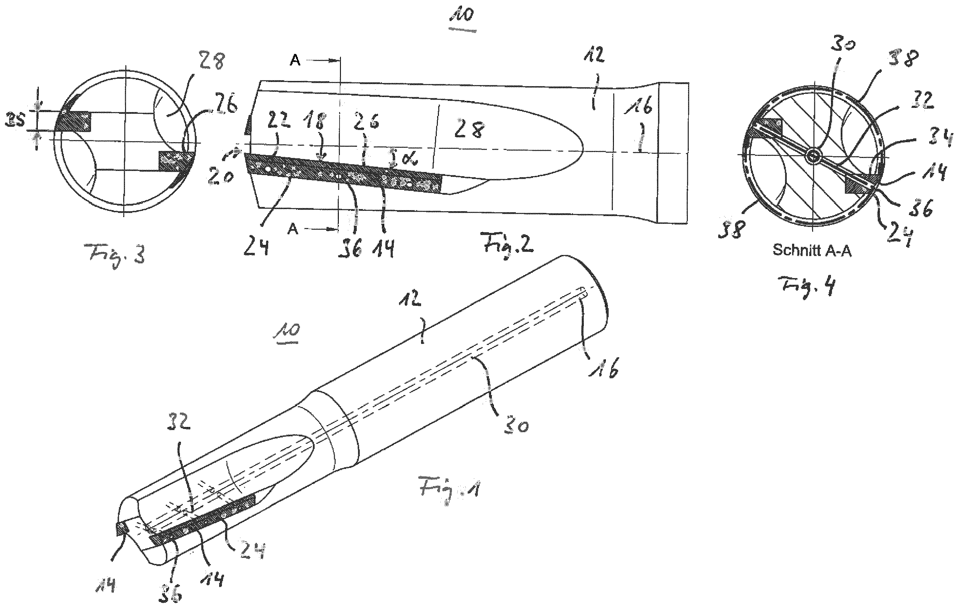

Fig. 1 bis 4 zeigen ein nicht erfindungsgemäßes Zerspanwerkzeug 10 in Form eines Schaftfräsers. Der Schaftfräser 10 umfasst einen Werkzeugkörper 12 mit einem vorderen schaftförmigen Arbeitsabschnitt 18, an dem mit gleichmäßiger Verteilung am Umfang zwei Schneideinsätze 14 befestigt sind. Die Schneideinsätze 14 aus z. B. Solid-PKD haben im Wesentlichen die Form stabförmiger Kreissegmente, mit einer Breite BS von vorzugsweise BS = 2,5 mm, die sich in Längsrichtung des Werkzeugkörpers 12 bezogen auf eine Mittelachse 16 mit einem Spiralisierungswinkel α erstrecken.

Die Schneideinsätze 14 weisen jeweils eine radial aus dem Werkzeugkörper 12 herausragende Schneidkante 18 - sogenannte Mantelschneide - und eine axial nach vorne über den Werkzeugkörper 12 vorstehende Schneidkante 20 - sogenannte Stirnschneide - auf.

An die Schneidkante 18 schließen sich in Umfangsrichtung Freiflächen 22, 24 mit verschiedenen Freiwinkeln an. Die Schneideinsätze 14 sind jeweils in passende, in den Werkzeugkörper eingefräste Längsschlitze angelötet, die sich entlang des Spiralisierungswinkels α erstrecken.

Die Schneideinsätze 14 bilden Spanflächen 26, wobei diese in der Schnittebene parallel oder im Wesentlichen parallel zu einer Radialebene 26 verlaufen. In Drehrichtung des Reibwerkzeugs befindet sich vor jeder Spanfläche 26 ein Spanraum 28, der durch eine 03. Juli 2015-55367 B

Ausfräsung in der Umfangsfläche des Werkzeugkörpers 12 erzeugt ist. Der Spanraum 28 ist im Querschnitt kreisbogenförmig ausgebildet und erstreckt sich ebenfalls entlang des Spiralisierungswinkels a.

Bei dem Zerspanungswerkzeug hat ein zentraler Kühlmittelkanal 30 über mehrere in dem Werkzeugkörper verlaufende Abzweigkanäle 32 Anschluss an radial verlaufende Kühlmittelkanalabschnitte 34, die jeweils vollständig als Bohrung durch die Schneideinsätze 14 verlaufen und jeweils in einer Mündungsöffnung 36 in der Freifläche 24 münden.

Durch den zentralen Kühlmittelkanal 30, die Abzweigkanäle 32 sowie die Kühlmittelkanalabschnitte 34 in den Schneideinsätzen 14 wird Kühlmittel unter einem hohen Druck von mehr als 40 bar zugeführt, welches die Schneideinsätze 14 von innen nach außen kühlt.

Zur weiteren Verbesserung der Kühlung sowie Erzeugung eines Kühlmittelfilms 38 auf einer zu bearbeitenden Werkstückoberfläche entlang der Längserstreckung des Schneideinsatzes 14 ist vorgesehen, dass entlang Längserstreckung des Schneideinsatzes 14 in der Freifläche 24 eine Mehrzahl von Mündungsöffnungen 36 vorgesehen sind.

Folglich wird nicht nur die Kühlung der Schneideinsätze 14, sondern auch die Schmierung einer zu bearbeitenden Werkstückoberfläche verbessert. Des Weiteren wird auch eine verbesserte Spanabführung aus dem Spanraum 28 durch Spülung dieses durch das aus der Freifläche des vorlaufenden Schneideinsatzes austretenden Kühlmittels erreicht.

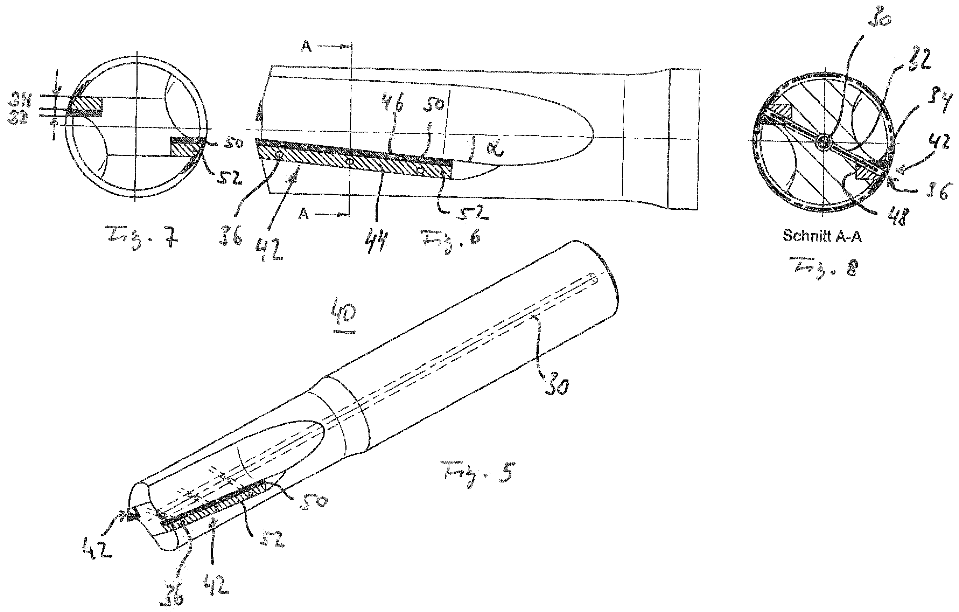

Die Fig. 5 bis 8 zeigen ein nicht erfindungsgemäßes Zerspanwerkzeug 40 in Form eines Schaftfräsers. Der Schaftfräser 40 unterscheidet sich von dem Schaftfräser gemäß den Fig. 1 bis 4 dadurch, dass dieser Schneideinsätze 42 aufweist, die als Verbund-PKD oder Verbund-CBN ausgebildet sind. Die Schneideinsätze 42 umfassen einen Hartmetallträger 44 mit einer Dicke BH von vorzugsweise BH = 1,5 mm, auf den eine PKD- oder CBN-Diamantschicht 46 mit einer Dicke BD von vorzugsweise BD = 1 mm angeordnet ist. Die Schneideinsätze 42 sind in entlang des Spiralisierungswinkels α eingefrästen Nuten aufgenommen und in diesen befestigt wie verlötet.

Umfangsseitig bildet der Diamantanteil 46 eine erste Freifläche 50 und der Hartmetallabschnitt 44 eine zweite Freifläche 52. In die zweite Freifläche 52 werden die Kühlmittelkanalabschnitte 34 unter Bildung von Mündungsöffnungen 36 in radialer Richtung eingebracht wie gebohrt. Entlang der Längserstreckung des Schneideinsatzes 42 sind eine Mehrzahl, in diesem Fall drei Mündungsöffnungen 36, mit zugeordneten Kühlmittelkanalabschnitten 34 vorgesehen.

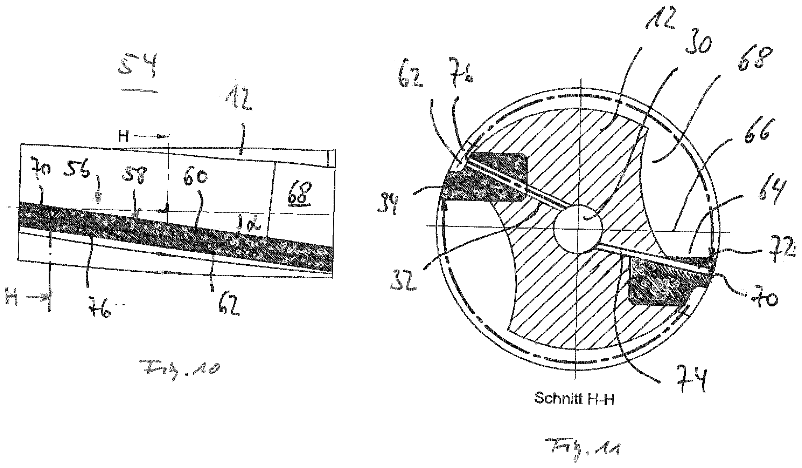

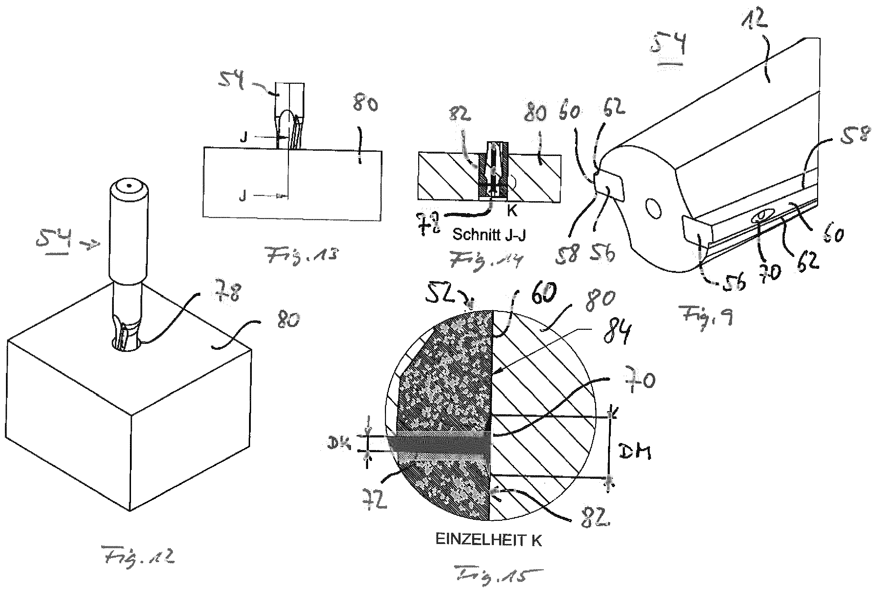

Die Fig. 9 bis 14 zeigen eine erste Ausführungsform eines erfindungsgemäßen Zerspanungswerkzeugs 54 in Form eines Reibwerkzeugs. Das Reibwerkzeug 54 weist einen Aufbau auf, der dem Aufbau des Zerspanungswerkzeugs gemäß Fig. 1 bis 4 entspricht, wobei die Schneideinsätze 56 aus Solid-PKD oder Solid-CBN ausgebildet und jeweils eine radial aus dem Werkzeugkörper 12 herausragende Schneidkante 58 aufweisen, an die sich in Umfangsrichtung eine Rundfasenfläche 60 sowie eine Freifläche 62 anschließt.

Der Schneideinsatz 56 bildet eine Spanfläche 64, wobei diese in einer Schnittebene parallel oder im Wesentlichen parallel zu einer Radialebene 66 verläuft. In Drehrichtung des Reibwerkzeugs befindet sich vor jeder Spanfläche 64 ein Spanraum 68, der durch eine Ausfräsung in der Umfangsfläche des Werkzeugkörpers 12 gebildet ist. Der Spanraum 68 ist im Querschnitt kreisbogenförmig ausgebildet und erstreckt sich ebenfalls entlang des Spiralisierungswinkels a.

Das Reibwerkzeug 54 zeichnet sich gegenüber dem Stand der Technik dadurch aus, dass zumindest eine Mündungsöffnung 70 für Kühlmittel umfangsseitig in der Rundfasenfläche 60 vorgesehen ist, die über einen Kühlmittelkanalabschnitt 72, der vollständig durch den Schneideinsatz 56 verläuft, über einen Abzweigkanal 74 in den zentralen Kühlmittelkanal 30 mündet. Des Weiteren sind Mündungsöffnungen 76 in der Freifläche 62 vorgesehen, die über die Kühlmittelkanalabschnitte 34 und die Abzweigkanäle 32 mit dem zentralen Kühlmittelkanal 30 verbunden sind. Im dargestellten Ausführungsbeispiel ist die Mündungsöffnung 70 der Rundfasenfläche 60 in Draufsicht ellipsenförmig und im Querschnitt trichterförmig ausgebildet.

Fig. 12 zeigt eine Anwendung des Reibwerkzeugs 54 zur Feinbearbeitung einer Bohrung 78 in einem Werkstück 80. Durch das sogenannte "Reiben" soll sowohl die Oberflächengüte als auch die Form- und Maßgenauigkeit der Bohrung 78 verbessert werden.

Fig. 14 zeigt eine Schnittdarstellung der Bohrung 78 entlang der Schnittlinie J-J gemäß Fig. 13, wobei die Rundfasenflächen 60 der Schneideinsätze 52 an einer Innenwandung 82 der Bohrung 78 anliegen.

Fig. 15 zeigt eine vergrößerte Querschnittsansicht des Kühlmittelkanalabschnitts 72 mit einem Durchmesser DK mit einer runden oder ovalen Mündungsöffnung 70. Um eine wirksame Verteilung des Kühlmittels zur Bildung eines Ölfilms 84 zwischen der Rundfasenfläche 60 und der Innenwandung 82 der Bohrung 78 zu erreichen, ist vorgesehen, dass die Mündungsöffnung 70 trichterförmig ausgebildet ist. Die Mündungsöffnung 70 kann vorzugsweise als Senkung mit einem Durchmesser DM ausgebildet sein.

Abweichend von dem in den Zeichnungen dargestellten Reibwerkzeug kann der erfinderische Gedanke auch bei anderen Zerspanungswerkzeugen mit Schneideinsätzen aus SOLID-PKD, oder SOLID-CBN, Verbund-PKD und/oder Verbund-CBN Anwendung finden, z. B. bei Fräswerkzeugen oder Bohrwerkzeugen, wobei eine andere Schneidengeometrie, andere Spanwinkel und/oder andere Gestaltung der Span-, Rundfasen- und/oder Freifläche Anwendung finden.

Bei Anwendung von PKD- oder CBN- Solid- oder Verbund-Material werden zunächst die Längsschlitze in den Werkzeugkörper 12 gefräst, in die sodann die Schneideinsätze 24, 42, 56 als stabförmige Kreissegmente eingelegt und verlötet werden. Sodann werden ebenfalls mittels eines Funkenerodierverfahrens die Kühlmittelkanalabschnitte und Mündungsöffnungen in das PKD-oder CBN-Material bzw. Hartmaterial bei Verbund-Ausführung eingebracht. Anschließend werden mittels einer Erodiermaschine die spiralisierten Schneidkanten, die Spanflächen, die Rundfasenflächen und/oder die Freiflächen erodiert. Alternativ zu einem Funkenerodierverfahren kann auch ein Laserverfahren eingesetzt werden.

## Patentansprüche

1. Reib-, Fräs- oder Bohrwerkzeug, mit zumindest einem an einem Werkzeugkörper (12) befestigten Schneideinsatz (56) aus polykristallinem Diamant (PKD) oder kubischem Bornitrid (CBN), wobei ein durch den Werkzeugkörper (12) geführter Kühlmittelkanal (30) einen Anschluss an wenigstens einen in dem Schneideinsatz (56) eingearbeiteten Kühlmittelkanalabschnitt (72) bildet,
**dadurch gekennzeichnet,**
**dass** der Schneideinsatz (56) zumindest eine Rundfasenfläche (60) aufweist und das der Kühlmittelabschnitt (72) mit zumindest einer Mündungsöffnung (36, 70, 76) in der Rundfasenfläche (60) des Schneideinsatzes (56) mündet.

2. Zerspannungswerkzeug nach Anspruch 1,
**dadurch gekennzeichnet,**
**dass** der Kühlmittelkanalabschnitt (72) vollständig in dem Schneideinsatz (56) verläuft.

3. Zerspanungswerkzeug nach Anspruch 1 oder 2,
**dadurch gekennzeichnet,**
**dass** die in der Rundfasenfläche (60) eingearbeitete Mündungsöffnung (70) trichterförmig ausgebildet ist.

4. Zerspanungswerkzeug nach zumindest einem der vorhergehenden Ansprüche,
**dadurch gekennzeichnet,**
**dass** der Kühlmittelkanalabschnitt (72) als Bohrung durch den Schneideinsatz (56) ausgebildet ist.

5. Zerspanungswerkzeug nach zumindest einem der vorhergehenden Ansprüche,
**dadurch gekennzeichnet,**
**dass** der Schneideinsatz (56) als Solid-PKD oder Solid-CBN mit einer Dicke BS im Bereich von 1,5 mm ≤ BS ≤ 5 mm, vorzugsweise BS = 2,5 mm, ausgebildet ist.

6. Zerspanungswerkzeug nach zumindest einem der vorhergehenden Ansprüche,
**dadurch gekennzeichnet,**
**dass** der Schneideinsatz (56) als Verbund-PKD oder Verbund-CBN ausgebildet ist, mit einem Hartmetallträger einer Dicke BH im Bereich von 1 mm ≤ BH ≤ 2 mm, vorzugsweise BH = 1,5 mm, und einer PKD- oder CBN-Schicht mit einer Breite BD im Bereich von 0,5 mm ≤ BD ≤ 1,5 mm, vorzugsweise BD = 1 mm.

7. Zerspanungswerkzeug nach zumindest einem der vorhergehenden Ansprüche,
**dadurch gekennzeichnet,**
**dass** der Kühlmittelkanalabschnitt (72, 74) einen Durchmesser DK im Bereich von 0,15 mm ≤ DK ≤ 1,5 mm, vorzugsweise DK = 0,6 bis 0,8 mm aufweist.

8. Zerspanungswerkzeug nach zumindest einem der vorhergehenden Ansprüche,
**dadurch gekennzeichnet,**
**dass** die trichterförmige Mündungsöffnung (76) einen Durchmesser DM im Bereich von 0,5 mm ≤ DM ≤ 1,5 mm, vorzugsweise DM = 1 mm aufweist.

9. Zerspanungswerkzeug nach zumindest einem der vorhergehenden Ansprüche,
**dadurch gekennzeichnet,**
**dass** der Schneideinsatz (14, 42, 56) eine Freifläche (24, 44, 62) aufweist und dass die in einem Schneideinsatz eingearbeiteten Kühlmittelkanalabschnitte (32, 34, 72) mit zumindest einer Mündungsöffnung (31) in der Freifläche (24, 44, 72) münden.

10. Zerspanungswerkzeug nach zumindest einem der vorhergehenden Ansprüche,
**dadurch gekennzeichnet,**
**dass** der Schneideinsatz (14, 42, 56) entlang der Längsrichtung der Rundfasenfläche (60) und/oder Freifläche (24, 44, 62) mehrere Mündungsöffnungen (36, 70,76) für Kühlmittel aufweist.

11. Zerspanungswerkzeug nach zumindest einem der vorhergehenden Ansprüche,
**dadurch gekennzeichnet,**
**dass** die Kühlmittelkanalabschnitte (32) einen radialen Verlauf aufweisen.

## Claims

1. A friction tool, milling tool or drilling tool with at least one cutting insert (56) fastened on a tool body (12) of polycrystalline diamond (PCD) or cubic boron nitride (CBN), wherein a coolant conduit (30) runs through the tool body (12) forms a connection to at least one coolant conduit section (72) worked into the cutting insert (56),
**characterized in,**
**that** the cutting insert (56) comprises at least one round, beveled surface (60) and that the coolant conduit section (72) ends with at least one mouth opening (70) in the round, beveled surface (60) of the cutting insert (56).

2. The cutting tool according to claim 1,
**characterized in,**
**that** the coolant conduit section (72) runs completely in the cutting insert (56).

3. The cutting tool according to claim 1 or 2,
**characterized in,**
**that** the mouth opening (70) worked into the round, beveled surface (60) is funnel-shaped.

4. The cutting tool according to one of the previous claims,
**characterized in,**
**that** the coolant conduit section (72) is constructed as a borehole through the cutting insert (56).

5. The cutting tool according to one of the previous claims,
**characterized in,**
**that** the cutting insert (56) is constructed as a solid PCD or solid CBN with a width BS in the range of 1.5 mm ≤ BS ≤ 5 mm, preferably BS = 2.5 mm.

6. The cutting tool according to one of the previous claims,
**characterized in,**
**that** the cutting insert (56) is constructed as a composite PCD or composite CBN with a hard metal carrier with a width BH in the range of 1 mm ≤ BH ≤ 2 mm, preferably BH = 1.5 mm, and a PCD- or CBN layer with a width BD in the range of 0.5 mm ≤ BD ≤ 1.5 mm, preferably BD = 1 mm.

7. The cutting tool according to one of the previous claims,
**characterized in,**
**that** the coolant conduit section (72, 74) has a diameter of DK in the range of 0.15 mm ≤ DK ≤ 1.5 mm, preferably DK = 0.6 to 0.8 mm.

8. The cutting tool according to one of the previous claims,
**characterized in,**
**that** the funnel-shaped mouth opening (76) has a diameter DM in the range of 0.5 mm ≤ DM ≤ 1.5 mm, preferably DM = 1 mm.

9. The cutting tool according to one of the previous claims,
**characterized in,**
**that** the cutting insert (14, 42, 56) comprises a free surface (24, 44, 62) and that the coolant conduit sections (32, 34, 72) with at least one mouth opening (31) ends in the free surface (24, 44, 72).

10. The cutting tool according to one of the previous claims,
**characterized in,**
**that** the cutting insert (14, 42, 56) comprises several mouth openings (36, 70, 76) for coolant along the longitudinal direction of the round, beveled surface (60) and/or free surface (24, 44, 62).

11. The cutting tool according to one of the previous claims, **characterized in,**
**that** the coolant conduit sections (32) have a radial course.

## Revendications

1. Outil d'alésage, de fraisage ou de perçage, avec au moins une plaquette de coupe (56) fixée à un corps d'outil (12), en diamant polycristallin (PKD) ou nitrure cubique de bore (CBN), sachant qu'un conduit de liquide de refroidissement (30) traversant le corps d'outil (12) forme un raccord à au moins une section de conduit de liquide de refroidissement (72) incorporée à la plaquette de coupe (56),
**caractérisé en ce**
**que** la plaquette de coupe (56) présente au moins une surface à arrondi (60) et que la section de conduit de liquide de refroidissement (72) débouche par au moins une embouchure (36, 70, 76) dans la surface à arrondi (60) de la plaquette de coupe (56).

2. Dispositif d'enlèvement de copeaux selon la revendication 1,
**caractérisé en ce**
**que** la section de conduit de liquide de refroidissement (72) s'étend entièrement dans la plaquette de coupe (56).

3. Dispositif d'enlèvement de copeaux selon la revendication 1 ou 2,
**caractérisé en ce**
**que** l'embouchure (70) incorporée à la surface à arrondi (60) est conçue en forme d'entonnoir.

4. Dispositif d'enlèvement de copeaux selon au moins une des revendications précédentes,
**caractérisé en ce**
**que** la section de conduit de liquide de refroidissement (72) est conçue sous forme de perçage à travers la plaquette de coupe (56).

5. Dispositif d'enlèvement de copeaux selon au moins une des revendications précédentes,
**caractérisé en ce**
**que** la plaquette de coupe (56) est conçue sous forme de PKD solide ou de CBN solide avec une épaisseur BS telle que 1,5 mm < BS < 5 mm, de préférence BS = 2,5 mm.

6. Dispositif d'enlèvement de copeaux selon au moins une des revendications précédentes,
**caractérisé en ce**
**que** la plaquette de coupe (56) est conçue sous forme de PKD composite ou de CBN composite, avec un support en métal dur d'une épaisseur BH telle que 1 mm < BH < 2 mm, de préférence BH = 1,5 mm, et une couche de PKD ou de CBN avec une largeur BD telle que 0,5 mm < BD < 1,5 mm, de préférence BD = 1 mm.

7. Dispositif d'enlèvement de copeaux selon au moins une des revendications précédentes,
**caractérisé en ce**
**que** la section de canal de liquide de refroidissement (72, 74) présente un diamètre DK tel que 0,15 mm < DK < 1,5 mm, de préférence DK = 0,6 à 0,8 mm.

8. Dispositif d'enlèvement de copeaux selon au moins une des revendications précédentes,
**caractérisé en ce**
**que** l'embouchure en forme d'entonnoir (76) présente un diamètre DM tel que 0,5 mm < DM <1,5 mm, de préférence DM = 1 mm.

9. Dispositif d'enlèvement de copeaux selon au moins une des revendications précédentes,
**caractérisé en ce**
**que** la plaquette de coupe (14, 42, 56) présente une surface libre (24, 44, 62) et que les sections de conduit de liquide de refroidissement (32, 34, 72) incorporées dans une plaquette de coupe débouchent par au moins une embouchure (31) dans la surface libre (24, 44, 72).

10. Dispositif d'enlèvement de copeaux selon au moins une des revendications précédentes,
**caractérisé en ce**
**que** la plaquette de coupe (14, 42, 56) présente plusieurs embouchures (36, 70, 76) pour le liquide de refroidissement le long du sens longitudinal de la surface à arrondi (60) et/ou de la surface libre (24, 44, 62).

11. Dispositif d'enlèvement de copeaux selon au moins une des revendications précédentes,
**caractérisé en ce**
**que** les sections de conduit de liquide de refroidissement (32) présentent un tracé radial.
